**Europäisches Patentamt**

**European Patent Office**

**Office européen des brevets**

(19)

(11) Veröffentlichungsnummer: **0 059 236**
**B1**

(12)

# EUROPÄISCHE PATENTSCHRIFT

(45) Veröffentlichungstag der Patentschrift:
26.02.86

(51) Int. Cl.⁴: **G 06 F** :'10

(21) Anmeldenummer: 81108289.0

(22) Anmeldetag: 13.10.81

(54) Verfahren und Schaltungsanordnung zur Adressierung von Adressumsetzungsspeichern.

(30) Priorität: 27.02.81 DE 3107632

(43) Veröffentlichungstag der Anmeldung:
08.09.82 Patentblatt 82/36

(45) Bekanntmachung des Hinweises auf die Patenterteilung:
26.02.86 Patentblatt 86/9

(84) Benannte Vertragsstaaten:
AT BE CH FR GB IT LI NL SE

(56) Entgegenhaltungen:
EP - A - 0 010 195
FR - A - 2 197 484
US - A - 3 781 808
US - A - 3 902 163
US - A - 4 037 215

(73) Patentinhaber: *Siemens Aktiengesellschaft, Berlin und München Wittelsbacherplatz 2, D-8000 München 2 (DE)*

(72) Erfinder: **Bethmann, Jürgen, Dipl.-Ing., Herzogplatz 11, D-8011 Zorneding (DE)**

EP 0 059 236 B1

**Beschreibung**

Die Erfindung bezieht sich auf ein Verfahren und eine Schaltungsanordnung zur Adressierung von Adreßumsetzungsspeichern gemäß dem Oberbegriff der Ansprüche 1 und 2.

Bei Datenverarbeitungsanlagen mit virtueller Speicheradressierung ist es bekanntlich erforderlich, daß die virtuelle Adresse vor jedem Zugriff zum Arbeitsspeicher in eine reale physikalische Adresse übersetzt wird. Diese Übersetzung erfolgt, um den Aufwand gering zu halten, dadurch, daß man den virtuellen und den physikalischen Speicher in Seiten gleicher Größe unterteilt und über Übersetzungstafeln, die beispielsweise im Arbeitsspeicher stehen können, jeder physikalischen Seitenadress eine virtuelle Seitenadresse zuordnet.

Es sind bereits Datenverarbeitungsanlagen bekannt, bei denen übersetzte Adressen von mehreren virtuellen Adreßräumen in einem oder gegebenenfalls mehreren Adreßumsetzungsspeichern über Programmgrenzen hinweg resident gehalten werden können. Jeder Eintrag im Adreßumsetzungsspeicher erhält dabei die gleiche Kennzeichnung wie der zugehörige virtuelle Adressenraum. Bei einem Wechsel von einem virtuellen Adressenraum zu einem anderen kann daher das Rücksetzen aller Einträge im Adreßumsetzungsspeicher entfallen, weil eine eindeutige Zuordnung der realen Adressen in den Adreßumsetzungsspeichern zum jeweils aktuellen Programm gewährleistet ist. Bei diesem bekannten Adressierverfahren bestehen jedoch insofern Probleme, als sich verschiedene Programme gegenseitig dadurch behindern können, daß bereits übersetzte Adressen beim Eintragen neuer realer Adressen in die Adreßumsetzungsspeicher gegenseitig überschrieben werden. Darüber hinaus werden vielfach einzelne Bereiche der Adreßumsetzungsspeicher gegenüber anderen bevorzugt belegt, so daß die an sich vorhandene Kapazität nicht vol genutzt wird. Die Anzahl der Einträge aus der mikroprogrammierten Adreßübersetzung eines Programms liegt deshalb in der Regel wesentlich unter de Anzahl der verfügbaren Plätze in dem bzw. den Adreßumsetzungsspeichern.

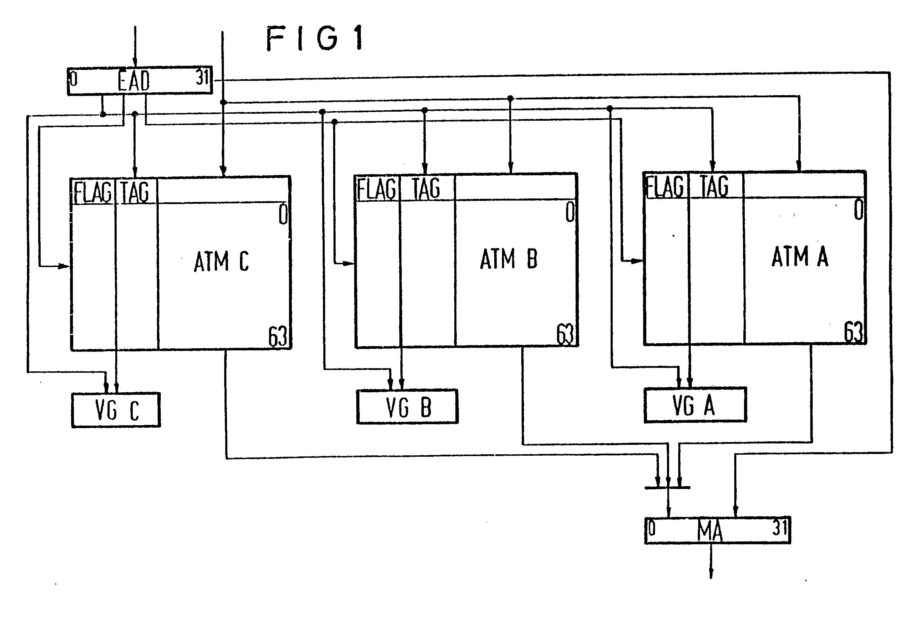

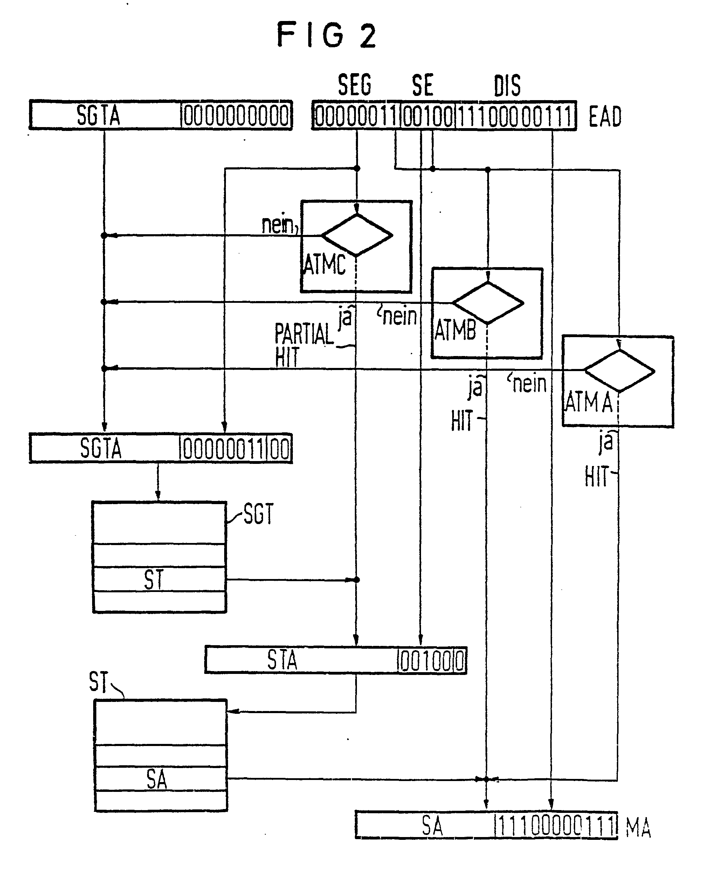

Das an sich bekannte Verfahren zur Übersetzung virtueller Adressen in entsprechende reale Adressen wird im folgenden anhand der Figuren 1 und 2 näher erläutert. Bei der in Fig. 1 dargestellten Adreßumsetzungseinrichtung sind drei Adreßumsetzungsspeicher ATM A, B, C vorgesehen, in denen die Ergebnisse aus früher erfolgten mikroprogrammierten Adreßübersetzungen hinterlegt sind. Jedem Adreßumsetzungsspeicher für jeweils 64 Einträge ist ein Speicherteil für Kontroll- und Steuerbits, sogenannte Flags zur Unterscheidung unterschiedlicher Einträge sowie ein Speicherteil für Kennzeichen- bits, sogenannte Tags zugeordnet. In den beiden Adreßumsetzungsspeichern ATM A und ATM B sind jeweils reale Seitenadressen, im Adreßumsetzungsspeicher ATM C sogenannte Seitentafeladressen gespeichert. Die Tag/Flag-Speicher werden jeweils mit einem Teil der im Adreßregister EAD vorhandenen virtuellen Adresse angesteuert. Sofern der am Ausgang der Tag/Flag-Speicher vorgesehene Vergleicher VG A, B, C Adressengleichheit zwischen dem im Tag/Flag-Speicher enthaltenen Eintrag und dem zugehörigen Anteil der virtuellen Adresse signalisiert, wird die im zugehörigen Adreßumsetzungsspeicher enthaltene Adresse an das die reale Adresse aufnehmende Hauptspeicher-Adreßregister MA übertragen.

Die Funktion dieser bekannten Adreßumsetzungseinrichtung wird im folgenden anhand der Fig. 2 näher erläutert. Die virtuelle Adresse, bestehend aus dem Segmentteil SEG, dem Seitenteil SE und dem Bereits real vorliegenden Distanzteil DIS wird im Adreßregister EAD bereitgestellt. Zur Adreßumsetzung wird mit Teilen des Segment- und Seitenteils der virtuellen Adresse in den zwei Adreßumsetzungsspeichern ATM A, B, in denen reale Seitenadressen gespeichert sind und im ATM C, in dem eine reale Seitentafeladresse gespeichert ist, parallel jeweils eine Zeile ausgewählt. Jeder Adreßumsetzungsspeicher hat 64 Einträge, die mit sechs Bit adressiert werden. Nach Auswahlt des Eintrages wird für jeden der drei Speicher ein Vergleich zwischen Teilen der virtuellen Adresse und dem adressierten Eintrag durchgeführt. Bei Übereinstimmung (Hit) in einem der Adreßumsetzungsspeicher ATM A oder ATM B wird aus der realen Seitennummer, die der selektierten · Zeile entnommen wird, und der Distanz DIS der virtuellen Adresse die reale Adresse gebildet und zum Hauptspeicher-Adreßregister MA übertragen. Gibt es in keinem dieser beiden Adreßumsetzungsspeicher ATM A oder ATM B Übereinstimmung, ist sie mit höherer Wahrscheinlichkeit im Adreßumsetzungsspeicher ATM C möglich (Partialhit). In diesem Fall wird die reale Adresse durch eine einstufige Adreßumsetzung über die Seitentafel ST im Hauptspeicher ermittelt. Die reale Adresse für den Seitentafeleintrag ergibt sich aus der realen Seitentafeladresse STA, die dem adressierten Eintrag des Adreßumsetzungsspeichers ATM C entnommen wird, und dem Seitenteil SE der virtuellen Adresse.

Kommt keine Übereinstimmung in einem der drei Adreßumsetzungsspeicher ATM A, ATM B, oder ATM C zustande, dann wird eine zweistufige Adreßumsetzung erforderlich. Ausgangspunkt ist die reale Segmenttafeladresse SGTA. Während der Adreßumsetzung wird zunächst zur Segmenttafel SGT und anschließend gemäß der Tabellenhierarchie zur Seitentafel ST zugegriffe. Die Adresse des Segmenttafeleintrags wird durch Addition der Segmentnummer (Bit 8 bis 15 der virtuellen Adresse) mit der Segmenttafeladresse SGTA gewonnen. Der Segmenttafeleintrag, d.h. die Segmenttafeladresse SGTA einschließlich der Ringschutzbits, wird in die adressierte Zeile des Adreßumsetzungsspeichers ATM C eingetragen. Die Adresse des Seitentafeleintrags wird durch Addition der Seitennummer (Bit 16 bis 20 der virtuellen Adresse) mit der Seitentafeladresse STA gewonnen. Der Seitentafeleintrag enthält Kontrollbits und die reale Seitenadresse SA, die zusammen mit dem Schreib-Kontrollbit in einen der beiden Adreßumsetzungsspeicher ATM A oder ATM B eingetragen wird. Zusätzlich werden Teile der virtuellen Adresse als sogenannte Kennzeichenbits bzw. Tags in der adressierten Zeile mit abgespeichert. Die reale Zugriffsadresse ergibt sich schließlich aus der Kettung der Distanz DIS mit der realen Seitenadresse SA.

Aus EP—A1—0 010 195 ist eine Vorrichtung zur Umwandlung virtueller Adressen in Hauptspeicheradressen unter Verwendung eines Hash-Generators bekannt, wobei dieser Hash-Generator dafür sorgt, daß eine gleichmäßige Verteilung der Adressen für eine Hash-Tabelle trotz ungleichmäßiger Verteilung der virtuellen Adressen sichergestellt ist, unabhängig davon, ob das virtuelle Speichersystem eine große Anzahl kleiner Objekte oder eine kleine Anzahl großer Objekte umfaßt. Zu diesem Zweck wird eine zweite Bitgruppe durch eine erste Bitgruppe modifiziert, wobei die erste Bitgruppe zur Adressierung eines Objekts und die zweite Bitgruppe zur Adressierung innerhalb eines Objekts dient.

Bei einem weiteren, aus der US—A—3 781 808 bekannten virtuellen Speichersystem wird durch eine EXKLUSIV-ODER-Verknüpfung der für den Adreßumsetzungsspeicher bestimmten Adreßbits mit mehreren Identifizierungsbits eine gleichmäßigere Verteilung der Adressen für den Adreßumsetzungsspeicher erreicht.

Ausgehend von einem Adreßumsetzungsverfahren der eingangs genannten Art liegt der vorliegenden Erffindung die Aufgabe zugrunde, eine durch gegenseitige Überschreibung verursachte Behinderung verschiedener Programme mit Hilfe einer Adreßmodifikation zu verringern und außerdem dafür zu sorgen, daß der in den Adreßumsetzungsspeichern verfügbare Speicherraum optimal genutzt wird.

Die Lösung dieser Aufgabe ergibt sich erfindungsgemäß durch die kennzeichnenden Merkmale des Patentanspruchs 1.

Eine vorteilhafte Schaltungsanordnung zur Durchführung des erfindungsgemäßen Verfahrens ist im Patentanspruch 2 angegeben.

Im folgenden wird ein Ausführungsbeispiel der Erfindung anhand der Fig. 3 bis 6 näher erläutert. Dabei zeigen:

Fig. 3 eine Schaltungsanordnung zur Adressierung des die Seitentafeladressen speichernden Adreßumsetzungsspeichers ATM C.

Fig. 4 die Zuordnung einzelner Programme auf die verschiedenen Speicherbereiche in Abhängigkeit von der jeweils durch Kennzeichenbits modifizierten Adresse im Adreßumsetzungsspeicher ATM C.

Fig. 5 eine Schaltungsanordnung zur Adressierung der die Seitenadressen speichernden Adreßumsetzungsspeicher ATM A und ATM B.

Fig. 6 die Zuordnung einzelner Programme auf die verschiedenen Speicherbereiche der Adreßumsetzungsspeicher ATM A und ATM B in Abhängigkeit von der jeweils durch Kennzeichenbits modifizierten Adresse.

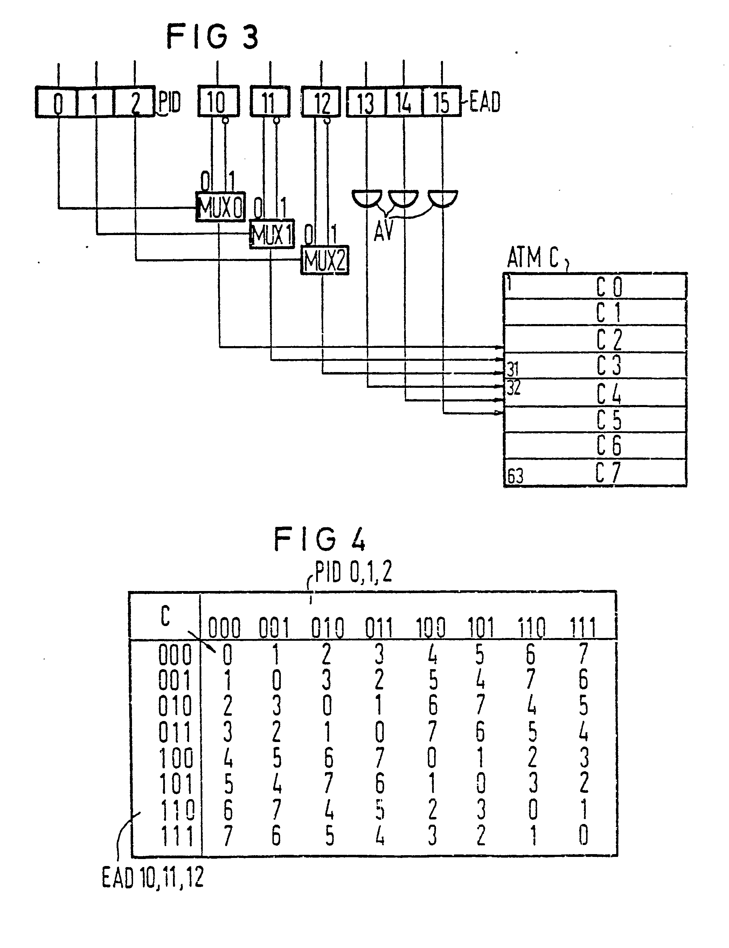

Für den Adreßumsetzungsspeicher ATM C werden die Bits 10 bis 15 des Segmentteils SEG der im Adreßregister EAD bereitgestellten virtuellen Adresse zur Adressierung einer bestimmten Zeile benutzt. Jedes der verschiedenen, z.B. acht unterstützten Programme erhält eine eigene Anfangsadresse, von der ab die Seitentafeladressen aus den mikroprogrammierten Adreßübersetzungen in den Adreßumsetzungsspeicher ATM C eingetragen werden können. Die Adressierung für das Auslesen und das Eintragen ist gleich. Die Vergabe der Adressen in Abhängigkeit von den einzelnen Programmkennzeichen, die eine gleichmäßige Ausnutzung aller Speicherplätze (Bereiche C0 bis C7) gewährleistet, wird durch die in Fig. 3 im Prinzip dargestellte Schaltungsanordnung erreicht. Die drei höchstwertigen Bits EAD 10 bis 12 der Zeilenadresse sowie ihre jeweils invertierten Werte werden über Zweifachmultiplexer MUX 0, MUX 1, MUX 2 an den Adreßumsetzungsspeicher ATM C geführt. Diese Multiplexer dienen gleichzeitig als Adreßsignalverstärker. Für die übrigen Bits der Zeilenadresse sind separate Adreßsignalverstärker AV vorgesehen. Die Steuerung der eingangsseitig mit den beiden Polaritäten der Adressenbits EAD 10, 11, 12 beschalteten Multiplexer MUX 0, MUX 1, MUX 2 erfolgt direkt durch drei Bits des jeweiligen Programmkennzeichens, das in einem Register PID gespeichert ist. Dadurch werden die Einträge der $2^3 = 8$ unterstützten Programme gruppenweise gegeneinander versetzt bzw. vertauscht (siehe die Tabelle in Fig. 4). Die für jedes Programm spezifischen Kennzeichenbits sind im sogenannten Flag-Feld des zugehörigen Adreßumsetzungsspeichers abgespeichert. Die Vergabe der Programm-Kennzeichen erfolgt über eine Tabelle im Schattenspeicher (Teil des Hauptspeichers, dessen Speicherplätze nicht vom Programm her aufgerufen werden können). Für jedes der acht unterstützten Programme existiert darin ein Eintrag, der ihren virtuellen Adressenraum repräsentiert. Aus der Platznummer dieses Eintrags in der Tabelle ergibt sich dann das jeweilige Programmkennzeichen (Bit 27 bis 29 der Schattenspeicheradresse des Tabelleneintrags). Bei jedem im Prozessor aktuell werdenden Programm wird zunächst nachgesehen, ob dafür bereits ein Eintrag in der Tabelle existiert. Ist er vorhanden, wird das zugehörige Programmkennzeichen im Prozessor aktualisiert, so daß das Programm auf seine noch vorhandenen früheren Einträge in den Adreßumsetzungsspeichern zurückgreifen kann. Ist dagegen in der Tabelle für das jeweils aktuelle Programm kein Eintrag vorhanden, dann wird der älteste Eintrag, der durch ein Alterungsbit gekennzeichnet ist, durch den neuen ersetzt. Der in der Tabellenadresse zunächst höhere Platz bekommt nun dieses Alterungsbit, d.h. die Tabelle wird zyklisch nach aufsteigenden Tabellenadressen verwaltet. Nach dem achten Eintrag wird wieder mit der niedrigsten Adresse begonnen. Wird ein neuer Eintrag in der Tabelle im Schattenspeicher vorgenommen, müssen alle Zeilen in den Adreßumsetzungsspeichern mit dem entsprechenden Programmkennzeichen für ungültig erklärt werden, weil hierunter jetzt ein neuer virtueller Adressenraum unterstützt wird. Die Einträge in den Adreßumsetzungsspeichern können abhängig vom jeweiligen Programmkennzeichen selektiv gelöscht werden.

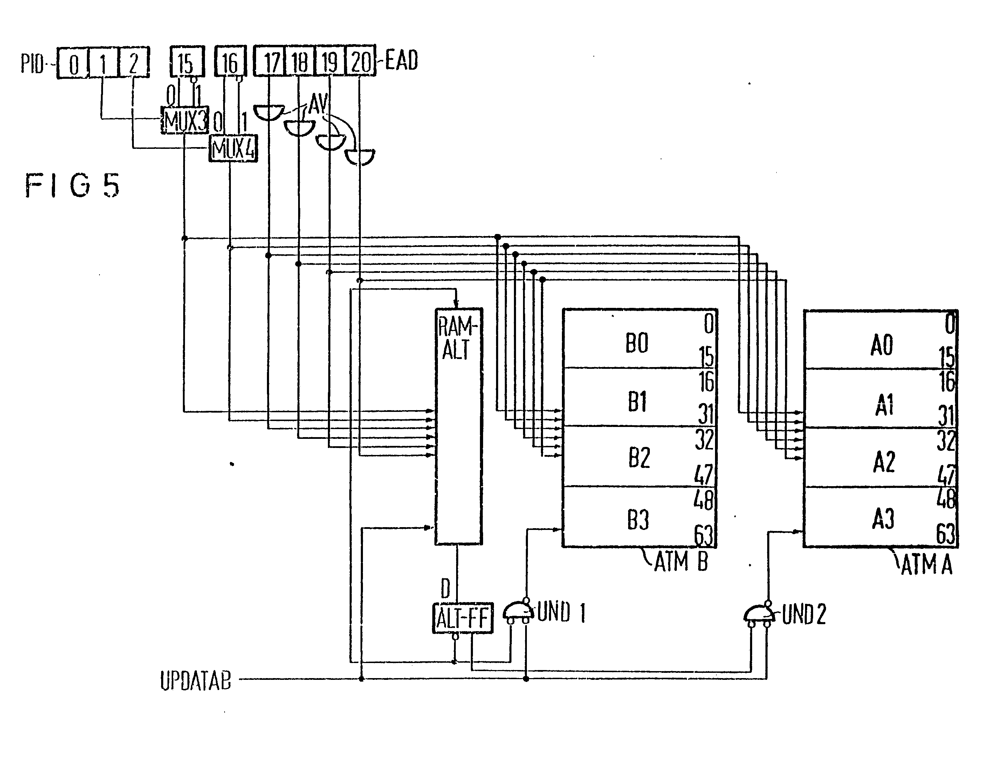

Eine Schaltungsanordnung zur Adressierung der Adreßumsetzungsspeicher ATM A und ATM B ist in Fig. 5 dargestellt. Die beiden Adreßumsetzungsspeicher ATM A und ATM B werden gleichwertig betrieben. Die Adressierung der 64 Zeilen erfolgt für beide mit den Adressenbits EAD 15 bis 20 des Seitenteils der virtuellen Adresse. Im Gegensatz zum Adreßumsetzungsspeicher ATM C werden hier aber nur die zwei höchstwertigen Adressenbits EAD 15, 16 des Seitenteils SE der virtuellen Adresse durch das Programmkennzeichen modifiziert. Dadurch werden für die beiden Adreßumsetzungsspeicher ATM A und ATM B jeweils nur vier Anfangsadressen vergeben. Die Größe der einzelnen jeweils einem Programm zugeordneten Speicherbereiche A 0 ... A 3, B 0 ... B 3, d.h. der Abstand zum jeweils nächsten Bereich ist deswegen größer gewählt, weil zu jedem Segmenttafeleintrag im Adreßumsetzungsspeicher ATM C bis zu 32 Seitentafeladressen STA in den beiden Adreßumsetzungsspeichern ATM A und ATM B gehören können.

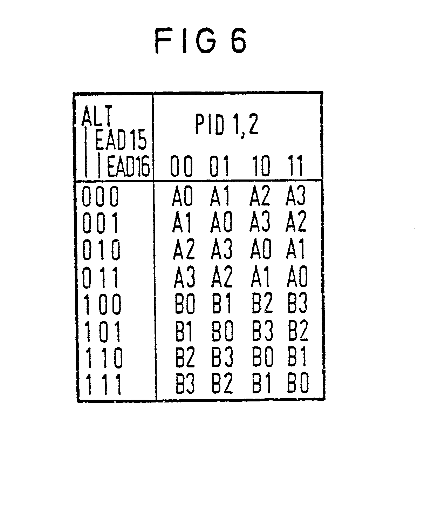

Ein zusätzlicher Auswahlmodus über ein Alternierungsbit bewirkt beim Eintragen der Ergebnisse aus der mikroprogrammierten Adreßübersetzung, daß abwechselnd in den Adreßumsetzungsspeicher ATM A oder ATM B geschrieben wird. Auf diese Weise erhält man über beide Speicher acht unterschiedliche Anfangsadressen. Gleichzeitig wird erreicht, daß bei einer möglichen erneuten Adressierung einer Zeile immer nur der ältere der beiden Einträge in den beiden Adreßumsetzungsspeichern ATM A oder ATM B überschrieben werden kann. Durch die Überlagerung der Alternierung mit der Adressenmodifikation durch das Programmkennzeichen werden alle Bereiche in den Adreßumsetzungsspeichern vollständig ausgenutzt. Die jeweilige Zuordnung einzelner Programme auf die verschiedenen Speicherbereiche in Abhängigkeit von den jeweils durch Programmkennzeichenbits modifizierten Adreßbits und dem Alternierungsbit ist aus der in Fig. 6 dargestellten Tabelle ersichtlich.

Die in Fig. 5 dargestellte Schaltungsanordnung zur Adressierung der beiden Adreßumsetzungsspeicher ATM A und ATM B ist ähnlich aufgebaut wie die für den Adreßumsetzungsspeicher ATM C. Hier werden dagegen nur die zwei höchstwertigen Bits EAD 15, 16 der Zeilenadresse mit beiden Polaritäten an je einen Zweifachmultiplexer MUX 3, MUX 4 geschaltet. Auch hier dienen die Multiplexer gleichzeitig als Adreßsignalverstärker. Die Ansteuerung erfolgt direkt durch die beiden Programmkennzeichenbits PID 1 und PID 2.

Der wechselweise Betrieb der beiden Adreßumsetzungsspeicher ATM A und ATM B wird durch ein Alternierungsbit gesteuert. Dieses Alternierungsbit wird in einem 64 mal 4-Bitspeicher RAM-ALT geführt, der genauso adressiert wird wie die Adreßumsetzungsspeicher ATM A und ATM B. Das anhängende Flipflop ALT-FF dient als Puffer und zum Invertieren der ausgelesenen Information. Wird ein Schreibimpuls UPDATAB für einen Eintrag in die Adreßumsetzungsspeicher ATM A oder ATM B gegeben, so erfolgt der Eintrag, abhängig von der Stellung des Alternierungsbits, z.B. über das UND-Glied UND 1 in den Adreßumsetzungsspeicher ATM B. Gleichzeitig wird mit diesem Schreibimpuls das invertierte Alternierungsbit in den Alternierungsbit-Speicher RAM-ALT unter der gleichen Zeilenadresse zurückgeschrieben. Wird diese Zeile erneut für einen Eintrag adressiert, zeigt das Alternierungsbit auf den Adreßumsetzungsspeicher ATM A. Der Schreibimpuls gelangt jetzt über ein zweites UND-Glied UND 2 nur an den Adreßumsetzungsspeicher ATM A.

Im Lesebetrieb werden die Adreßumsetzungsspeicher ATM A und ATM B parallel adressiert. Die reale Adresse bei einem Treffer (Hit) kann dann entweder aus dem Speicher ATM A oder aus dem Speicher ATM B kommen.

**Patentansprüche**

1. Verfahren zur Adressierung von Adreßumsetzungsspeichern (ATM A, ATM B, ATM C), welche den logischen Adreßraum eines in mehrere Segmente mit jeweils mehreren Seiten unterteilten virtuellen Speichers in den physikalischen Adreßraum des Hauptspeichers abbilden, unter Verwendung zweier gleichgroßer Adreßumsetzungsspeicher (ATM A, ATM B) erster Art, welche mit denselben Teilen des Segment- (SEG) und Seitenteils (SE) der virtuellen Adresse adressiert werden und eine reale Seitenadresse (SA) abgeben und eines Adreßumsetzungsspeichers (ATM C) zweiter Art, welcher mit dem Segmentteil (SEG) der virtuellen Adresse adressiert wird und eine reale Seitentafeladresse (STA) abgibt, welche zum Seitenteil der virtuellen Adresse gefügt wird und die Adressierung einer im Hauptspeicher befindlichen Seitentafel erlaubt, welche reale Seitenadressen enthält, dadurch gekennzeichnet, daß zur Adressierung des Adreßumsetzungsspeichers (ATM C) zweiter Art die n höherwertigen Bits des Segmentteils (SEG) der virtuellen Adresse mit n Programmkennzeichnen-Bits (PID 0, 1, 2) derart modifiziert werden, daß jedem der $2^n$ Programme jeweils einer von $2^n$ Bereichen innerhalb dieses Adreßumsetzungsspeichers zugeordnet wird und daß zur Adressierung der beiden Adreßumsetzungsspeicher (ATM A, ATM B) erster Art, die jeweils in $2^m$ Bereiche unterteilt sind, einerseits die m=n−1 höherwertigen Bits des Seitenteils (SE) der virtuellen Adresse mit m=n−1 Programmkennzeichen-Bits (PID 1, 2) modifiziert werden und andererseits ein in gleicher Weise wie die beiden Adreßumsetzungsspeicher erster Art adressierbarer Alternierungsbitspeicher (RAM-ALT) vorgeshen ist, dessen jeweils ausgelesenes Alternierungsbit wechselweise einen der beiden Adreßumsetzungsspeicher (ATM A, ATM B) erster Art ansteuert und in invertierter Forum unter der gleichen Adresse wieder in den Alternierungsbitspeicher zurückgeschrieben wird.

2. Schaltungsanordnung zur Adressierung von Adreßumsetzungsspeichern (ATM A, ATM B, ATM C), welche den logischen Adreßraum eines in mehrere Segmente mit jeweils mehreren Seiten unterteilten virtuellen Speichers in den physikalischen Adreßraum des Hauptspeichers abbilden, unter Verwendung zweier gleichgroßer Adreßumsetzungsspeicher (ATM A, ATM B) erster Art, welche mit denselben Teilen des Segment- (SEG) und Seitenteils (SE) der virtuellen Adresse adressiert werden und eine reale Seitenadresse (SA) abgeben und eines Adreßumsetzungsspeichers (ATM C) zweiter Art, welcher mit dem Segmentteil (SEG) der virtuellen Adresse adressiert wird und eine reale Seitentafeladresse (STA) abgibt, welche zum Seitenteil der virtuellen Adresse gefügt wird und die Adressierung einer im Hauptspeicher befindlichen Seitentafel erlaubt, welche reale Seitenadressen enthält, dadurch gekennzeichnet, daß die jeweils höchstwertigen Bits (EAD 10, 11, 12) des Segmentteils (SEG) der virtuellen Adresse mit beiden Polaritäten je einem, durch je ein Programmkennzeichnen-Bit (PID 0, 1, 2) steuerbaren Zweifachmultiplexer (MUX 0, 1, 2) zügeführt sind und die Ausgangssignale dieser Zweifachmultiplexer zusammen mit den übrigen Adreßbits des Segmentteils die Zeilenadresse für den Adreßumsetzungsspeicher zweiter Art (ATM C) bilden, daß die jeweils höchstwertigen Bits (EAD 15, 16) des Seitenteils (SE) der virtuellen Adresse mit beiden Polaritäten je einem weiteren, durch je ein Programmkennzeichnen-Bit (PID 1, 2) steuerbaren Zweifachmultiplexer (MUX 3, 4) zugeführt wind und die Ausgangssignale dieser weiteren Zweifachmultiplexer (MUX, 3, 4) zusammen mit den übrigen Adreßbits des Seitenteils (SE) die Zeilenadresse für die beiden Adreßumsetzungsspeicher erster ART (ATM A, ATM B) bilden, daß ein mit der Zeilenadresse der beiden Adreßumsetzungsspeicher (ATM A, ATM B) erster Art adressierbarer Alternierungsbit-Speicher (RAM-ALT) vorgesehen ist, dessen Ausgang mit einem Puffer-Flipflop (ALT-FF) verbunden ist, daß die beiden Ausgangssignale des Puffer-Flipflops (ALT-FF) mit jeweils verschiedener Polarität über je ein UND-Glied (UND 2, UND 1) mit einem Schreibimpuls (UPDATAB) zur wechselweisen Ansteuerung eines der beiden Adreßumsetzungsspeicher (ATM A, ATM B) erster Art verknüpt sind und daß der negierte Ausgang des Puffer-Flipflops (ALT-FF) mit dem Eingang des Alternierungsbit-Speichers (RAM-ALT) verbunden ist.

## Revendications

1. Procédé pour l'adressage de mémoires de conversion d'adresses (ATM A, ATM B, ATM C) qui reproduisent la zone d'adresse logique d'une mémoire virtuelle subdivisée en plusieurs segments, avec respectivement plusieurs pages, dans la zone d'adressage physique, avec la mise en œuvre de deux mémoires de conversion d'adresses de même importance (ATM A, ATM B) d'un premier genre, lesquelles sont adressées avec les mêmes parties de la partie de segment (SEG) et la partie de page (SE) de l'adresse virtuelle et émettent une adresse de page réelle (SA), et d'une mémoire de conversion d'adresses (ATM C) d'un second genre, laquelle est adressée avec la partie de segment (SEG) de l'adresse virtuelle et émet une adresse de table de page (STA) qui est ajoutée à la partie de page de l'adresse virtuelle, et autorise l'adressage d'une table de pages qui se trouve dans la mémoire principale et qui contient des adresses réelles de pages, caractérisé par le fait que pour l'adressage de la mémoire de conversion d'adresses (ATM C) du second genre, les n bits de poids forts de la partie de segment (SEG) de l'adresse virtuelle sont modifiés de telle façon avec n bits indicatifs de programme (PID 0, 1, 2), qu'à chacun des $2^n$ programmes est associée l'une de $2^n$ zones dans cette mémoire de conversion d'adresses, et que l'adressage de deux mémoires de conversion d'adresses (ATM A, ATM B) du premier genre, qui sont subdivisées chacune en $2^m$ zones, d'une part les m=n−1 bit de poids forts de l'élément de pages (SE) de l'adresse virtuelle sont modifiés avec m=n−1 bits indicatifs de programme, et, d'autre part, il est prévu une mémoire de bits d'alternat (RAM-ALT) adressables de la même manière que les deux mémoires de conversion d'adresses du premier genre et dont le bit d'alternat qui est lu commande l'une des deux mémoires de conversion d'adresses (ATM A, ATM B) du premier genre et est réinscrit sous forme inversée et sous la même adresse dans la mémoire de bits d'alternat.

2. Montage pour l'adressage de mémoires de conversion d'adresses (ATM A, ATM B, ATM C) qui reproduisent la zone d'adresse logique d'une mémoire virtuelle subdivisée en plusieurs segments, avec respectivement plusieurs pages, dans la zone d'adressage physique, avec la mise en oeuvre de deux mémoires de conversion d'adresses de même importance (ATM A, ATM B) d'un premier genre, lesquelles sont adressées avec les mêmes parties de la partie de segment (SEG) et la partie de page (SE) de l'adresse virtuelle et émettent une adresse de page réelle (SA), et d'une mémoire de conversion d'adresses (ATM C) d'un second genre, laquelle est adressée avec la partie de segment (SEG) de l'adresse virtuelle et émet une adresse de table de page (STA) qui est ajustée à la partie de pages de l'adresse virtuelle, et autorise l'adressage d'une table de pages qui set trouve dans la mémoire principale et qui contient des adresses réelles de pages, caractérisé par le fait que les bits les plus forts (EAD 10, 11, 12) de la partie de segment (SEG) de l'adresse virtuelle sont appliqués avec les deux polarités respectivement à un multiplexeur à deux étages (MUX 0, 1, 2) susceptible d'être commandé par un bit indicatif de programme (PID 0, 1, 2) et que les signaux de sortie de ces multiplexeurs à deux étages forment, avec les autres bits d'adresses de la partie de segment, l'adresse de ligne pour la mémoire de conversion d'adresse du second genre (ATM C), que les bits les plus forts (EAD 15, 16) de la partie de page (SE) de l'adresse virtuelle sont appliqués avec les deux polarités respectivement à un second multiplexeur à deux étages (MUX 3, 4) susceptible d'être commandé par un bit indicatif de programme (PID 1, 2), alors que les signaux de sortie de ces seconds multiplexeurs à deux étages (MUX 3, 4) forment, avec le restant des bits d'adresses de la partie de page (SE), l'adresse de ligne pour les deux mémoires de conversion d'adresses du premier genre (ATM A, ATM B), qu'il est prévu une mémoire de bits d'alternat (RAM-ALT) qui est susceptible d'être adressée avec l'adresse de ligne des deux mémoires de conversion d'adresses (ATM A, ATM B) du premier genre, dont la sortie est reliée à un multivibrateur bistable-tampon (ALT-FF), que les deux signaux de sortie du multivibrateur bistable tampon (ALT-FF) sont combinés logiquement, avec respectivement une polarité différente et respectivement par l'intermédiaire d'un circuit ET (ET 1, ET 2), avec une impulsion d'écriture (UPDATAB), pour la commande alternée de l'une des mémoires de conversion d'adresses (ATM A, ATM B) du premier genre, et que la sortie inversée du multivibrateur bistable tampon (ALT-FF) est reliée à l'entrée de la mémoire de bits d'alternat (RAM-ALT).

**Claims**

1. A method for addressing address conversion stores (ATM A, ATM B, ATM C) which convert the logic address space of a virtual store, which is divided into a plurality of segments each of which has a plurality of pages, into the physical address space of the main store, employing two address conversion stores (ATM A, ATM B) which are of identical size and of a first type and which are addressed by the same portions of the segment component (SEG) and the page component (SE) of the virtual address and transmit a real page address (SA), and employing an address conversion store (ATM C) of a second type which is addressed by the segment component (SEG) of the virtual address and transmits a real page table address (STA) which is added to the page component of the virtual address and allows the addressing of a page table which is present in the main store and contains real page addresses, characterised in that in order to address the address conversion store (ATM C) of a second type the n highest- value bits of the segment component (SEG) of the virtual address is modified by means of n programme character bits (PID 0, 1, 2) in such a manner that each of the $2^n$ programmes is assigned one of $2^n$ areas within the address conversion store, and that in order to address both adress conversion stores (ATM A, ATM B) of a first type which are respectively divided into $2^m$ areas, on the one hand the $m=n-1$ higher-value bits of the page component (SE) of the virtual address are modified by means of $m=n-1$ programme character bits (PID 1, 2) and on the other hand there is provided an alternating bit store (RAM-ALT) which can be addressed similarly to the two address conversion stores of a first type and whose read-out alternating bit controls in alternating manner one of the two address conversion stores (ATM A, ATM B) of a first type and is re-read into the alternating bit store in an inverted form under the same address.

2. A circuit arrangement for addressing address conversion stores (ATM A, ATM B, ATM C) which convert the logic address space of a virtual store, which is divided into a plurality of segments with a plurality of pages, into the physical address space of a main store, employing two address conversion stores (ATM A, ATM B) which are of identical size and of a first type and which are addressed by the same portions of the segment component (SEG) and the page component (SE of the virtual address and transmit a real page address, and employing an address conversion store (ATM C) of a second type which is addressed by the segment component (SEG) of the virtual address and transmits a real page table address (STA) which is added to the page component of the virtual address and allows the addressing of a page table which is present in the main store and which comprises real page addresses, characterised in that the highest-value bits (EAD 10, 11, 12) of the segment component (SEG) of the virtual address are respectively supplied with both polarities to a two-fold multiplexer (MUX 0, 1, 2) which is controllable by a programme character bit (PID 0, 1, 2) and the output signals of the two-fold multiplexers together with the remaining address bits of the segment component from the row address for the address conversion store of a second type (ATM C), that the highest-value bits (EAD 15, 16) of the page component (SE) of the virtual address are respectively supplied with both polarities to a further two-fold multiplexer (MUX 3, 4) which is controllable by a programme character bit (PID 1, 2) and the output signals of the further two-fold multiplexers (MUX 3, 4) together with the remaining address bits of the page table (SE) form the row address for the two address conversion stores of a first type (ATM A, ATM B), that there is provided an alternating bit store (RAM-ALT) which can be addressed by the row address of the two address conversion stores (ATM A, ATM B) of a first type and whose output is connected to a buffer flip-flop (ALT-FF), that the two output signals of the buffer flip-flop (ALT-FF) are coupled to a write pulse (UPDATAB) with different polarity via an AND-element (UND 2, UND 1), for the alternating control of one of the two address conversion stores (ATM A, ATM B) of a first type, and that the negated output of the buffer flip-flop (ALT-FF) is connected to the input of the alternating bit store (RAM-ALT).

F I G 1

0 059 236

# FIG 2

# FIG 3

PID: 0 1 2  
EAD: 10 11 12 13 14 15

MUX0 (0 1)  
MUX1 (0 1)  
MUX2 (0 1)

AV

ATM C

| | |
|---|---|
| 1 | C 0 |
| | C 1 |
| | C 2 |
| 31 | C 3 |
| 32 | C 4 |
| | C 5 |
| | C 6 |
| 63 | C 7 |

# FIG 4

PID 0,1,2

| C | 000 | 001 | 010 | 011 | 100 | 101 | 110 | 111 |
|---|---|---|---|---|---|---|---|---|
| 000 | 0 | 1 | 2 | 3 | 4 | 5 | 6 | 7 |
| 001 | 1 | 0 | 3 | 2 | 5 | 4 | 7 | 6 |
| 010 | 2 | 3 | 0 | 1 | 6 | 7 | 4 | 5 |
| 011 | 3 | 2 | 1 | 0 | 7 | 6 | 5 | 4 |
| 100 | 4 | 5 | 6 | 7 | 0 | 1 | 2 | 3 |
| 101 | 5 | 4 | 7 | 6 | 1 | 0 | 3 | 2 |
| 110 | 6 | 7 | 4 | 5 | 2 | 3 | 0 | 1 |
| 111 | 7 | 6 | 5 | 4 | 3 | 2 | 1 | 0 |

EAD 10,11,12

FIG 5

0 059 236

# FIG 6

| ALT<br>EAD 15<br>EAD16 | PID 1,2 | | | |
|---|---|---|---|---|
| | 00 | 01 | 10 | 11 |
| 0 0 0 | A0 | A1 | A2 | A3 |
| 0 0 1 | A1 | A0 | A3 | A2 |
| 0 1 0 | A2 | A3 | A0 | A1 |
| 0 1 1 | A3 | A2 | A1 | A0 |
| 1 0 0 | B0 | B1 | B2 | B3 |
| 1 0 1 | B1 | B0 | B3 | B2 |
| 1 1 0 | B2 | B3 | B0 | B1 |
| 1 1 1 | B3 | B2 | B1 | B0 |